# EUROPÄISCHE PATENTSCHRIFT

(11) **EP 0 845 285 B1**
(45) Veröffentlichungstag und Bekanntmachung des Hinweises auf die Patenterteilung: **02.06.2004**
(21) Anmeldenummer: 97119293.5
(22) Anmeldetag: 05.11.1997
(51) Int. Cl.: B01D 3/00, B01D 5/00, C12G 3/12

(54) **Destillationsvorrichtung**
Destillation apparatus
Dispositif de distillation

(30) Priorität: 14.11.1996 DE 19647125; 04.12.1996 DE 19650163
(43) Veröffentlichungstag der Anmeldung: 03.06.1998
(73) Patentinhaber: Kothe, Ulrich, 73054 Eislingen/Fils (DE)
(72) Erfinder: Kothe, Ulrich, 73054 Eislingen/Fils (DE)
(74) Vertreter: Steil, Christian, Dipl.-Ing.

(56) Entgegenhaltungen:
- EP-A- 0 355 773
- EP-A- 0 791 387
- WO-A-97/01387
- DE-A- 3 925 186
- DE-U- 29 614 551
- JP-A- 59 166 077

## Beschreibung

Die vorliegende Erfindung betrifft eine Destillationsvorrichtung zur Herstellung von Bränden, mit einem Maischebehälter, einer Verstärkungskolonne oder einem Hut, einem Kühler und einem Katalysator mit einem Gehäuse, der zwischen der Verstärkungskolonne oder dem Hut und dem Kühler angeordnet ist und der eine Schüttung oder eine Packung von Katalysatorteilen aufweist.

Eine solche Destillationsvorrichtung ist aus der EP 0 355 773 A2 bekannt.

Der bei der bekannten Destillationsvorrichtung verwendete Katalysator ist mit einer losen Schüttung aus kupfernen Formteilen gefüllt. Für den im Katalysator ausfallenden Lutter ist an dem Katalysator eine Auslaßöffnung vorgesehen. Diese Auslaßöffnung kann durch eine Rohrleitung oder ein Rohrleitungssystem direkt mit der Maischeblase und/oder mit der Verstärkungskolonne verbunden sein, so daß der Lutter "recycelt" werden kann. Da mit dieser Destillationsvorrichtung verhindert wird, daß der Lutter in den Kühler gelangt, kann ein schadstoffarmes Destillat gewonnen werden. Insbesondere können sich kein Urethancarbamat bzw. Ethylcarbonat in dem fertigen Destillat aufgrund von Lichteinfluß bilden, da das Destillat keine Cyanide enthält.

Es hat sich jedoch gezeigt, daß der Aufwand zur Reinigung des Katalysators relativ aufwendig ist. Denn hierzu müssen ein Geistdämpfeeintrittsstutzen, ein Geistdämpfeaustrittsstutzen und die Lutterrückführleitung von dem Katalysator gelöst werden.

Zudem ist es so, daß es nicht bei allen Destillationen erwünscht ist, die Geistdämpfe durch einen Kupferkatalysator strömen zu lassen.

Ähnliche Probleme ergeben sich bei einer Destillationsvorrichtung, die aus der JP 59-166077A bzw. JAPAN-Abstract C-262, Vol. 9, Nr. 17, 24. Januar 1985 bekannt geworden ist. Aus dieser Druckschrift ist es nämlich auch bekannt, einen Katalysator mit einer Schüttung aus Katalysatorteilchen fest in einer Rohrleitung zwischen Verstärkungskolonne und Kühler zu verankern. Zum Reinigen des Katalysators müssen auch hier die Rohrleitungen abgeschraubt werden.

Aus der eingangs genannten EP 0 355 773 A2 ist es ferner bekannt, parallel zu dem Katalysator eine Umgehungsleitung und ein umschaltbares Ventil vorzusehen, so daß der Anwender bei jedem Destillationsvorgang frei wählen kann, ob die Geistdämpfe den Kupferkatalysator durchströmen sollen oder nicht. Hierdurch wird natürlich auch der Reinigungsaufwand verringert, da der Katalysator nicht so häufig gereinigt werden muß. Nichtsdestotrotz muß auch dieser Katalysator vor einer Reinigung an seinen Stutzen von den entsprechenden Rohrleitungen gelöst werden.

Es ist demgemäß die Aufgabe der vorliegenden Erfindung, eine Destillationsvorrichtung anzugeben, deren Katalysator leichter zu reinigen ist.

Diese Aufgabe wird bei der eingangs genannten Destillationsvorrichtung dadurch gelöst, daß die Katalysatorteile in wenigstens einer Kartusche aufgenommen sind und daß das Gehäuse des Katalysators so ausgebildet ist, daß die Kartusche entnehmbar und austauschbar ist.

Die Aufgabe wird somit vollkommen gelöst.

Denn durch die Maßnahme, die Katalysatorteile in einer Kartusche anzuordnen und das Gehäuse des Katalysators so zu gestalten, daß die Kartusche entnehmbar und austauschbar ist, entfällt die Notwendigkeit, den Katalysator zu Reinigungszwecken von den angeschlossenen Rohrleitungen zu lösen. Falls eine Reinigung der Katalysatorteile notwendig ist, wird die Kartusche aus dem Gehäuse entnommen, ohne die Eintritts- bzw. Austrittsstutzen des Katalysators von den entsprechenden Rohrleitungen zu trennen. Nach dem Reinigen kann die Kartusche auf dieselbe Weise wieder eingesetzt werden. Die Katalysatorteile können als Schüttgut oder als feststehende Elemente (bzw. in Form von Lamellen oder Lamellenrohren) vorgesehen sein, so daß die Katalysatorteile entweder als Schüttung oder als Packung vorliegen.

Die erfindungsgemäße Maßnahme hat darüber hinaus auch den Vorteil, daß während der Reinigung einer Katalysatorkartusche eine Ersatzkartusche in das Katalysatorgehäuse eingesetzt werden kann, so daß die Destillationsvorrichtung längere Laufzeiten haben kann.

Ein weiterer Vorteil besteht darin, daß die Kartusche einfach entnommen werden kann, wenn ein Destillationsvorgang ohne Katalysatorwirkung gewünscht ist. Es ist also nicht notwendig, bei der erfindungsgemäßen Destillationsvorrichtung eine zu dem Katalysator parallele Leitung und ein entsprechendes Umschaltventil vorzusehen.

Schließlich erlaubt die erfindungsgemäße Ausgestaltung des Katalysators, daß dieser auch mit Kartuschen bestückt werden kann, die andere Katalysatorteile enthalten als Kupferteile. Bei der Herstellung von Bränden spielen so viele Faktoren eine Rolle, nicht zuletzt das subjektive Empfinden der Konsumenten, daß bei den Betreibern der Destillationsvorrichtungen häufig der Wunsch besteht, empirisch unter Änderung von einzelnen Destillationsparametern eine ideale Geschmacks- und Geruchsnote zu finden. Mit der erfindungsgemäßen Destillationsvorrichtung lassen sich solche empirischen Untersuchungen sehr leicht durchführen, indem Kartuschen mit unterschiedlichen Katalysatormaterialien bereitgestellt werden.

Vorzugsweise sind die Kartusche und das Gehäuse so aneinander angepaßt, daß in dem Katalysator anfallender Lutter über eine Öffnung in dem Gehäuse abfließen kann.

Durch diese Maßnahme wird erreicht, daß der während des Katalysationsvorganges anfallende Lutter trotz der Tatsache, daß das Katalysatormaterial in einer Kartusche angeordnet ist, über das Gehäuse abgeführt werden kann. Es versteht sich, daß der Lutter "recycelt" werden kann, indem er zurück auf die Maischeblase und/oder die Verstärkungskolonne gegeben wird.

Es ist weiterhin bevorzugt, wenn der Katalysator wenigstens zwei auswechselbare Einzelkartuschen aufweist und wenn das Gehäuse so ausgebildet ist, daß den Katalysator durchströmende Geistdämpfe nacheinander durch die Einzelkartuschen geleitet werden.

Durch diese Maßnahme wird die erfindungsgemäße Destillationsvorrichtung noch flexibler. Denn die Geistdämpfe können bei dieser Ausführungsform entweder durch keine Katalysatorkartusche, durch eine oder alle Einzelkartuschen hindurch geleitet werden. Somit läßt sich die wirksame Katalysatorlänge auf einfache Weise einstellen.

Dabei ist es bevorzugt, wenn das Gehäuse wenigstens einen Umlenkkanal aufweist, der die Einzelkartuschen seriell miteinander verbindet.

Durch diese Maßnahme ist es möglich, mit Einzelkartuschen, wie sie auch in Einzelkartuschenkatalysatoren eingesetzt werden, eine serielle Verbindung zu erzielen. Es ist mit anderen Worten nicht notwendig, die Einzelkartuschen speziell an die serielle Verbindung anzupassen.

Es ist dabei weiterhin bevorzugt, wenn der Umlenkkanal in einem Deckel ausgebildet ist, der zum Austauschen der Einzelkartuschen von dem Gehäuse abnehmbar ist.

Hierdurch wird erreicht, daß zur Ausbildung des Umlenkkanals an dem Gehäuse selbst keine aufwendigen Anpassungen vorgenommen werden müssen. Darüber hinaus ergibt sich bei dem Einsatz von mehr als zwei Kartuschen die Möglichkeit, durch geänderte Deckel mit anderen Umlenkkanälen die Verbindung der Einzelkartuschen zu variieren.

Gemäß einer weiteren bevorzugten Ausführungsform werden die aus der letzten Einzelkartusche austretenden Geistdämpfe an den Einzelkartuschen vorbei zu einem Austrittsstutzen des Katalysators geleitet.

Durch diese Maßnahme kann die Außentemperatur der Einzelkartuschen beeinflußt werden. Insbesondere kann die Kartusche durch die Geist- bzw. Wasserdämpfe beheizt werden. Alternativ können die Geistdämpfe auch durch das Gehäuse des Katalysators zu dem Austrittsstutzen geleitet werden, ohne an den Einzelkartuschen vorbei geleitet zu werden. Das Gehäuse kann auch so ausgebildet sein, daß beide Alternativen wahlweise durch Umschaltung möglich sind.

Nach einer alternativen bevorzugten Weiterbildung der Erfindung weist der Katalysator wenigstens zwei Einzelkartuschen und eine Ventilanordnung auf, die zwischen den Einzelkartuschen und einem Eintrittsstutzen sowie einem Austrittsstutzen des Katalysators angeschlossen ist und eine Umschaltung zwischen parallelem und seriellem Betrieb der Einzelkartuschen ermöglicht.

Durch die Möglichkeit, die Einzelkartuschen parallel zu schalten, können nicht nur die wirksame Katalysatorlänge sondern auch der wirksame Katalysatorquerschnitt variabel gestaltet werden. Darüber hinaus ergibt sich die Möglichkeit, Einzelkartuschen mit unterschiedlichen Katalysatormaterialien entweder parallel oder seriell miteinander zu verbinden. Diese Ausführungsform wird unabhängig davon, ob die einzelnen, durch die Ventilanordnung miteinander verschaltbaren Katalysatoren als Kartuschen ausgebildet sind, als eigene Erfindung angesehen.

Vorzugsweise sind die Einzelkartuschen länglich ausgebildet und sind in dem Gehäuse parallel zueinander ausgerichtet.

Hierdurch ergibt sich zum einen eine besonders kompakte Bauform. Weiterhin ist es bei dieser Anordnung besonders einfach, Einzelkartuschen durch am Gehäuse vorgesehene Umlenkkanäle seriell miteinander zu verbinden.

Es ist weiterhin von Vorzug, wenn die Kartusche mit wenigstens zwei Kanälen versehen ist, die mit unterschiedlichen Katalysatorteilen bestückbar sind.

Durch diese Maßnahme kann die Kartusche mit unterschiedlichen Katalysatormaterialien bestückt werden. Es ist jedoch bei dieser Art von Kartusche auch möglich, mehr oder weniger Material des gleichen Katalysatortyps vorzusehen, um die Kontaktdauer mit den Geistdämpfen zu verlängern oder zu verkürzen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Einige Ausführungsbeispiele der Erfindung sind in der beigefügten Zeichnung dargestellt und werden in der nachfolgenden Beschreibung näher erläutert. Es zeigen:
- Fig. 1: eine schematische Seitenansicht einer erfindungsgemäßen Destillationsvorrichtung;
- Fig. 2: eine erste Ausführungsform eines Katalysators einer erfindungsgemäßen Destillationsvorrichtung;
- Fig. 3: eine weitere Ausführungsform eines Katalysators mit vier Einzelkartuschen;
- Fig. 4: eine weitere Ausführungsform eines Katalysators der erfindungsgemäßen Destillationsvorrichtung mit drei Einzelkartuschen und einer variablen Ventilanordnung;
- Fig. 5: eine schematische Darstellung der Anordnung von Einzelkartuschen in einem rohrförmigen Katalysatorgehäuse; und
- Fig. 6: eine alternative Ausführungsform einer Kartusche in einer schematischen Abwicklung.

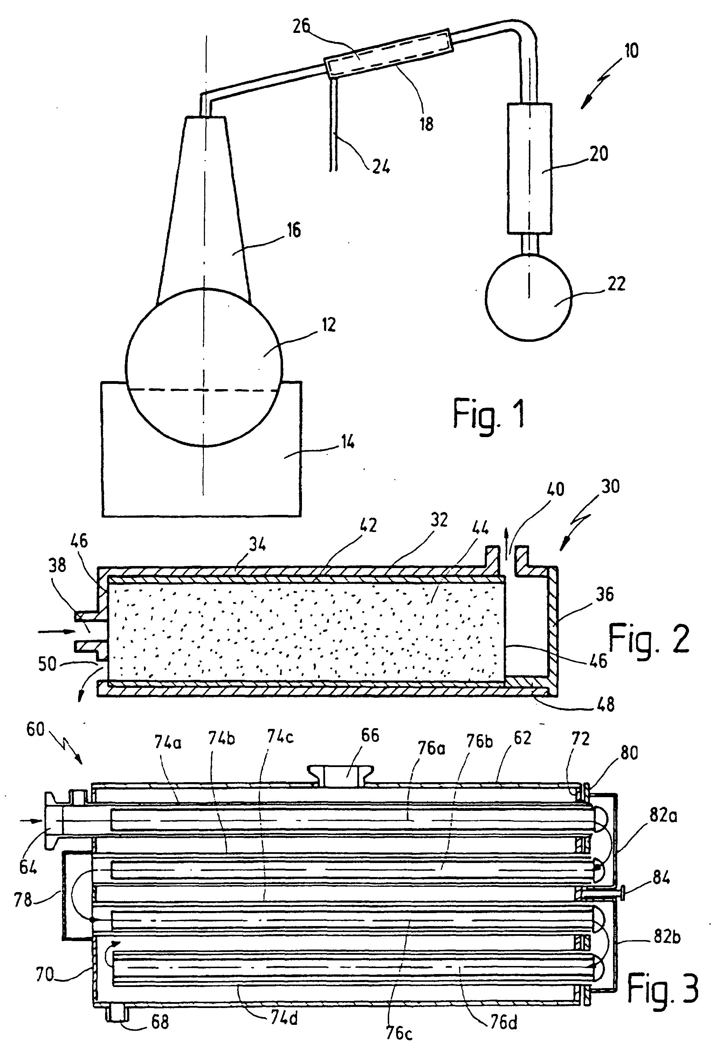

In Fig. 1 ist eine erfindungsgemäße Destillationsvorrichtung generell mit der Bezugsziffer 10 bezeichnet.

Die Destillationsvorrichtung 10 weist einen Maischebehälter 12 auf, der von einer Heizeinrichtung 14 beheizbar ist. Die durch die Erwärmung der Maische in dem Maischebehälter 12 aufsteigenden Geistdämpfe werden in der Verstärkungskolonne 16 auf bekannte Weise aufkonzentriert. Die aufkonzentrierten Geistdämpfe werden von der Verstärkungskolonne 16 einem Katalysator 18 über eine Rohrleitung zugeführt. Die den Katalysator 18 verlassenen Geistdämpfe werden über eine weitere Rohrleitung einem Kühler 20 zugeführt, in dem die aufkonzentrierten und katalysierten Geistdämpfe kondensiert werden. Das fertige Destillat wird in einem Geistsammelbehälter 22 aufgefangen.

Der Katalysator 18 ist mit einer Lutterrückführleitung 24 versehen, um den in dem Katalysator 18 anfallenden Lutter zurück auf die Maischeblase und/oder die Verstärkungskolonne 16 geben zu können. Auf diese Weise kann der Lutter "recycelt" werden.

In den Katalysator 18 ist eine Kartusche 26 einsetzbar, ohne die zu dem Katalysator hin und von diesem weg führenden Rohrleitungen lösen zu müssen. Bei nicht eingesetzter Kartusche 26 gehen die von der Verstärkungskolonne 16 aufkonzentrierten Geistdämpfe somit direkt in den Kühler 20.

Die Destillationsvorrichtung 10 eignet sich zur Herstellung von Bränden aller Art, insbesondere zur Herstellung von Obstbränden. Bei der Herstellung von Bränden aus Steinobst ist der Katalysator 18 besonders brauchbar, da durch die Lutterrückführung ein schadstofffreies, also keinerlei Urethancarbamat oder Cyanide enthaltendes Destillat gewonnen werden kann.

In Fig. 2 ist eine weitere Ausführungsform eines bei der Destillationsvorrichtung 10 zu verwendenden Katalysators generell mit der Bezugsziffer 30 bezeichnet.

Der Katalysator 30 weist ein etwa rohrförmiges Gehäuse 32 auf, das durch ein an einem ersten Ende geschlossenes Rohrstück 34 und einen auf das andere Ende des Rohrstückes 34 aufsetzbaren und von diesem leicht wieder lösbaren Deckel 36 gebildet ist.

An dem ersten Ende des Rohrstücks 34 ist ein Eintrittsstutzen 38 für Geistdämpfe vorgesehen. Ein Austrittsstutzen 40 für Geistdämpfe ist an dem Rohrstück 34 mantelseitig im Bereich des zweiten Endes ausgebildet.

In das Rohrstück 34 ist eine ebenfalls rohrförmige Kartusche 42 eingeführt, deren Außendurchmesser etwa dem Innendurchmesser des Rohrstückes 34 entspricht.

Die Kartusche 42 besteht im wesentlichen aus einem Rohrstück, das mit Katalysatormaterial 44 gefüllt ist und dessen Enden durch Siebe 46 gebildet sind. Die Siebe 46 sind so ausgebildet, daß das Katalysatormaterial 44 im Inneren der Kartusche 42 gehalten wird, Geistdämpfe und etwaig anfallender Lutter durch diese jedoch hindurchtreten können.

An der Innenseite des Deckels 36 ist ein Zapfen 48 vorgesehen, mittels dessen die Kartusche 42 an die Innenwand des ersten Endes des Rohrstückes 34 gedrückt wird, um zu gewährleisten, daß durch den Eintrittsstutzen 38 eintretende Geistdämpfe nicht an der Kartusche 42 vorbei geleitet werden.

An dem ersten Ende des Rohrstückes 34 ist weiterhin eine Lutteröffnung 50 vorgesehen, die so ausgebildet und angeordnet ist, daß in der Kartusche 42 anfallender Lutter über das benachbarte Sieb 46 aus dem Gehäuse 32 des Katalysators 30 abfließen kann.

Bei eingesetzter Kartusche 42 gehen die durch den Eintrittsstutzen 38 eintretenden Geistdämpfe zunächst durch das benachbarte Sieb 46, durchströmen anschließend die Katalysatormaterialfüllung 44 der Kartusche 42 und treten über das zweite Sieb 46 und über den Austrittsstutzen 50 aus dem Katalysator 30 aus, von wo sie zu dem Kühler 20 geleitet werden. Der Lutter kann über die Öffnung 50 abfließen.

Es ist zu erkennen, daß die Kartusche 42 durch Abnehmen des Deckels 36 von dem Rohrstück 34 leicht entfernt und wieder eingesetzt werden kann, ohne Rohrleitungen von den Stutzen 38, 40 oder der Öffnung 50 lösen zu müssen. Darüber hinaus ist es auch möglich, einen Destillationsvorgang ohne eingesetzte Kartusche 42 durchzuführen. In diesem Fall wirkt das Gehäuse 32 als reine Rohrleitung. Darüber hinaus ist es auch möglich, Kartuschen mit unterschiedlichen Katalysatormaterialien 44 einzusetzen.

In Fig. 3 ist eine dritte Ausführungsform eines Katalysators generell mit der Bezugsziffer 60 bezeichnet.

Der Katalysator 60 weist ein Gehäuse 62 auf, das mit einem Eintrittsstutzen 64 und einem Austrittsstutzen 66 für Geistdämpfe sowie mit einer Lutteröffnung 68 versehen ist.

Das Gehäuse 62 weist eine Vorderseite 70 und eine Rückseite 72 auf, wobei der Eintrittsstutzen 64 an der Vorderseite vorgesehen ist und wobei der Austrittsstutzen 66 zwischen der Vorderseite 70 und der Rückseite 72 in einer Mantelfläche des Gehäuses 62 angeordnet ist.

In dem Gehäuse 62 sind vier Kartuschenschächte 74a-d vorgesehen, die parallel zueinander angeordnet sind. Der erste Kartuschenschacht 74a erstreckt von dem Eintrittsstutzen 64 bis zur Rückseite 72 des Gehäuses 62. Die Kartuschenschächte 74b und 74c erstrecken sich jeweils von der Vorderseite 70 zur Rückseite 72. Der Kartuschenschacht 74d erstreckt sich von der Rückseite 72 bis kurz vor die Vorderseite 70.

In die Kartuschenschächte 74a-d sind vier Kartuschen 76a-d eingesetzt, deren Abmessungen identisch sind, die jedoch mit unterschiedlichen Katalysatormaterialien befüllt sein können.

An der Vorderseite 70 ist ein Umlenkkanal 78 vorgesehen, durch den die zwei Kartuschenschächte 74b und 74c verbunden sind.

An der Rückseite 72 ist ein Deckel 80 vorgesehen. Bei abgenommenem Deckel 80 können die Kartuschen 76a-d aus den Kartuschenschächten 74a-d entnommen werden. Der Deckel 80 ist mit zwei weiteren Umlenkkanälen 82a und 82b versehen, wobei der Umlenkkanal 82a die Kartuschen 76a und 76b verbindet und wobei der Umlenkkanal 82b die Kartuschen 76c und 76d verbindet. An dem Deckel 80 ist weiterhin ein Griff 84 vorgesehen, um den Deckel 80 leichter handhaben zu können.

Durch die Umlenkkanäle 78, 82a, 82b sind die vier Kartuschen 76a-d seriell miteinander verbunden. Über den Eintrittsstutzen 74 eintretende Geistdämpfe werden durch die erste Kartusche 76a zum Umlenkkanal 82a geführt, von dort in die Kartusche 76b, von der die Geistdämpfe zu dem Umlenkkanal 78 geführt werden. Von dem Umlenkkanal 78 aus treten die Geistdämpfe in die Kartusche 76c ein und werden anschließend über den Umlenkkanal 82b in die Kartusche 76d geleitet. Da der Kartuschenschacht 74d für die Kartusche 76d vor der Vorderseite 70 des Gehäuses 62 endet, treten die Geistdämpfe aus der Kartusche 76d im Inneren des Gehäuses 62 aus und strömen an den darüberliegenden Kartuschenschächten 74c, 74d und 74a vorbei zu dem Austrittsstutzen 66.

Durch die serielle Verbindung der Kartuschenschächte 74a-d ist es möglich, über den Eintrittsstutzen 64 eintretende Geistdämpfe durch eine Kartusche 76, durch zwei, drei oder vier Kartuschen 76 nacheinander hindurchtreten zu lassen, je nachdem wieviele Kartuschen 76 gerade in den Katalysator 60 eingesetzt sind. Darüber hinaus ist es auch möglich, die eintretenden Geistdämpfe durch Kartuschen mit unterschiedlichen Katalysatormaterialien hindurchtreten zu lassen, so daß sich eine breite Palette von Variationsmöglichkeiten ergibt, um den Destillationsvorgang optimal an das Ausgangsprodukt (Maische) und die gewünschte Qualität des erhaltenen Brandes anpassen zu können, insbesondere was die Geschmacks- und die Geruchsnote angeht.

Da die Mantelflächen der oberen Kartuschenschächte 74a, 74b, 74c von den aus der unteren Kartusche 76d austretenden Geistdämpfen umströmt werden, erfolgt eine Art von Rückerwärmung, so daß in den oberen Kartuschen 76a, 76b und 76c nicht allzu viel Lutter anfallen wird. In der unteren Kartusche 76d anfallender Lutter tropft in das Gehäuse ab, von wo er über die Öffnung 68 abgeführt werden kann. Auch sich an den Manteloberflächen der Kartuschenschächte 74a-d niederschlagendes Kondensat tropft auf den Boden des Gehäuses 62 und kann über die Öffnung 68 abgeführt werden.

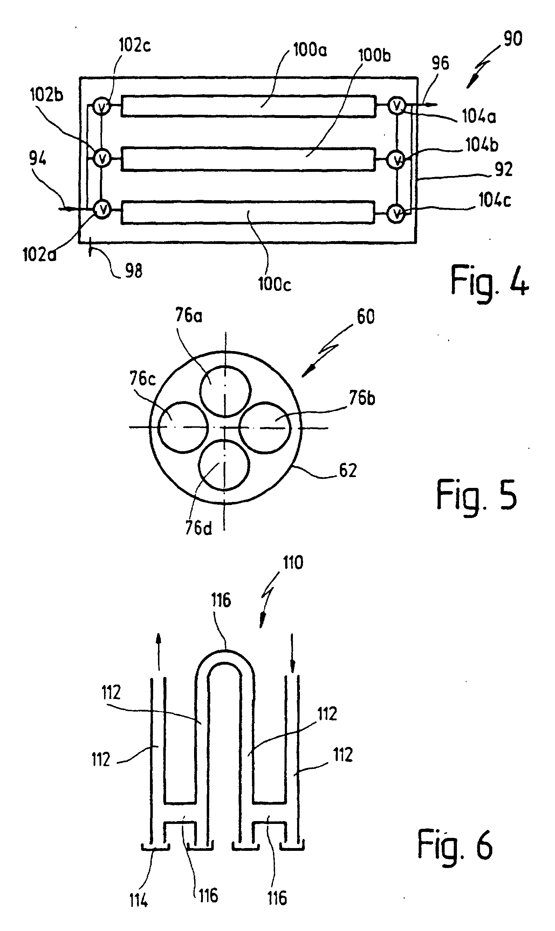

In Fig. 4 ist eine vierte Ausführungsform eines Katalysators generell mit der Bezugsziffer 90 bezeichnet. Die Darstellung von Fig. 4 ist rein schematischer Art. Konstruktive Details der in den Fig. 2 und 3 gezeigten Katalysatoren 30 bzw. 60 können auch auf diese Ausführungsform angewandt werden.

Der Katalysator 90 weist ein Gehäuse 92 mit einem Eintrittsstutzen 94 und einem Austrittsstutzen 96 für Geistdämpfe auf. Weiterhin ist eine Lutteröffnung 98 vorgesehen.

In dem Gehäuse 92 sind bei dieser Ausführungsform drei Katalysator-Kartuschen 100a, 100b und 100c parallel zueinander angeordnet. Die Eintritts- und die Austrittsöffnungen der Kartuschen 100a-c sind jeweils mit Ventilen 102a, 102b, 102c bzw. 104a, 104b und 104c verbunden. Die Ventile 102a-c sind jeweils mit dem Eintrittsstutzen 94 verbunden und weiterhin sind die Ventile 102a und 102b sowie die Ventile 102b und 102c untereinander verbunden.

Die Ventile 104a-c sind jeweils mit dem Austrittsstutzen 96 verbunden. Weiterhin sind die Ventile 104a und 104b sowie die Ventile 104b und 104c untereinander verbunden.

Die Ventile 102, 104 sind bei dieser Ausführungsform im Gehäuse 92 angeordnet. Es versteht sich jedoch, daß die Ventile auch außerhalb des Gehäuses angeordnet sein können. Die dargestellte Anordnung der Ventile 102, 104 ist auf höchste Variabilität ausgelegt und kann beliebig vereinfacht werden, solange eine Umschaltung von Seriell- auf Parallelbetrieb ermöglicht ist.

Durch die Ventile 102, 104 ist es möglich, die drei Kartuschen 100a-c auf beliebige Weise miteinander zu verschalten. So können die Kartuschen seriell miteinander verbunden werden oder parallel zueinander betrieben werden. Auch ist es möglich, nur eine oder zwei der Kartuschen - entweder seriell oder parallel zueinander - zu betreiben und eine oder zwei Kartuschen 100 leerlaufen zu lassen. Der Katalysator 90 eignet sich daher insbesondere für Anwendungen, bei denen auf einfache Weise empirisch ideale Geschmacks- und Geruchsnoten herausgefunden werden sollen.

Fig. 5 zeigt in schematischer Form eine bevorzugte Möglichkeit, die Einzelkartuschen 76a-d des in Fig. 3 gezeigten Katalysators 60 in einem rohrförmigen Gehäuse anzuordnen. Die Anordnung ist im wesentlichen sternförmig, so daß für die vier Einzelkartuschen 76 des Katalysators 60 ein Gehäuse 62 mit minimalem Rohrdurchmesser vorgesehen werden kann. In diesem Zusammenhang ist festzuhalten, daß die Darstellung von Fig. 3 mit den vier übereinanderliegenden Einzelkartuschen lediglich gewählt wurde, um die Verschaltung der Einzelkartuschen besser darstellen zu können.

Fig. 6 zeigt in einer schematischen Abwicklung eine alternative Ausführungsform einer Kartusche 110. Die Kartusche 110 ist mit vier Kanälen 112 versehen, in die jeweils gleiche oder verschiedene Katalysatormaterialien eingesetzt werden können. Die vier Kanäle 112 sind durch Verbindungskanäle 116 seriell miteinander verbunden, so daß die Geistdämpfe in einen der Kanäle 112 eintreten und aus einem anderen der Kanäle 112 austreten. Die Kanäle 112 sind darüber hinaus jeweils mit einer Blindkappe 114 versehen, um Katalysatormaterial in die Kanäle 112 einsetzen oder aus diesen entnehmen zu können. Es versteht sich, daß die Kartusche 110 vorzugsweise mit Katalysatormaterialeinsätzen in Form von Lamellen oder Lamellenrohren bestückt wird, um zu verhindern, daß sich lose Katalysatormaterialien über die Verbindungskanäle 116 miteinander vermischen.

Bei dieser Ausführungsform kann eine Destillationsvorrichtung, die mit einem Katalysatorgehäuse zur Aufnahme einer einzelnen Kartusche versehen ist, mit unterschiedlichen Katalysatormaterialien oder mit unterschiedlichen Katalysatormaterialkontaktdauern betrieben werden.

Schließlich ist noch anzumerken, daß die Katalysatoren 18, 30, 60, 90 in jeder beliebigen Einbaulage angeordnet werden können. Die Lutteröffnungen 24, 50, 68, 98 sind jeweils so vorzusehen, daß der Lutter möglichst gut aus dem Katalysatorgehäuse abfließen kann.

## Patentansprüche

1. Destillationsvorrichtung (10) zur Herstellung von Bränden, mit einem Maischebehälter (12), einer Verstärkungskolonne (14) oder einem Hut, einem Kühler (20) und einem Katalysator (18; 30; 60; 90) mit einem Gehäuse (32; 62; 92), der zwischen der Verstärkungskolonne (14) oder dem Hut und dem Kühler (20) angeschlossen ist und der eine Schüttung oder eine Packung von Katalysatorteilen (44) aufweist,
**dadurch gekennzeichnet, daß** die Katalysatorteile (44) in wenigstens einer Kartusche (26; 42; 76; 100) aufgenommen sind und daß das Gehäuse (32; 62; 92) so ausgebildet ist, daß die Kartusche (26; 42; 76; 100) abnehmbar und austauschbar ist.

2. Destillationsvorrichtung nach Anspruch 1, **dadurch gekennzeichnet, daß** die Kartusche (26; 42; 76; 100) und das Gehäuse (32; 62; 92) so ausgebildet sind, daß in dem Katalysator (18; 30; 60; 90) anfallender Lutter über eine Öffnung (24; 50; 68; 98) in dem Gehäuse (32; 62; 92) abfließen kann.

3. Destillationsvorrichtung nach Anspruch 1 oder Anspruch 2, **dadurch gekennzeichnet, daß** der Katalysator (60; 90) wenigstens zwei auswechselbare Einzelkartuschen (76a-d; 100a-c) aufweist und daß das Gehäuse (32; 62) so ausgebildet ist, daß den Katalysator (60; 90) durchströmende Geistdämpfe nacheinander durch die Einzelkartuschen (76a-d; 100a-c) geleitet werden.

4. Destillationsvorrichtung nach Anspruch 3, **dadurch gekennzeichnet, daß** das Gehäuse (62) wenigstens einen Umlenkkanal (78, 82) aufweist, der die Einzelkartuschen (76a-d) seriell miteinander verbindet.

5. Destillationsvorrichtung nach Anspruch 4, **dadurch gekennzeichnet, daß** der Umlenkkanal (82) in einem Deckel (80) ausgebildet ist, der zum Austauschen der Einzelkartuschen (76a-d) von dem Gehäuse (62) abnehmbar ist.

6. Destillationsvorrichtung nach einem der Ansprüche 3 bis 5, **dadurch gekennzeichnet, daß** die aus der letzten Einzelkartusche (76d) austretenden Geistdämpfe an den Einzelkartuschen (76a-d) vorbei zu einem Austrittsstutzen (66) des Katalysators (60) geleitet werden.

7. Destillationsvorrichtung nach Anspruch 1 oder Anspruch 2, **dadurch gekennzeichnet, daß** der Katalysator (90) wenigstens zwei Einzelkartuschen (100a-c) und eine Ventilanordnung (102, 104) aufweist, die zwischen den Einzelkartuschen (100a-c) und einem Eintrittsstutzen (94) sowie einem Austrittsstutzen (96) des Katalysators (90) angeschlossen ist und eine Umschaltung zwischen parallelem und seriellem Betrieb der Einzelkartuschen (100a-c) ermöglicht.

8. Destillationsvorrichtung nach einem der Ansprüche 3 bis 7, **dadurch gekennzeichnet, daß** die Einzelkartuschen (76a-d; 100a-c) länglich ausgebildet und in dem Gehäuse (62; 92) parallel zueinander ausgerichtet sind.

9. Destillationseinrichtung nach einem der Ansprüche 1 bis 8, **dadurch gekennzeichnet, daß** die Kartusche (110) mit wenigstens zwei Kanälen (112) versehen ist, die mit unterschiedlichen Katalysatorteilen bestückbar sind.

## Claims

1. A distillation apparatus (10) for producing spirits, comprising a mash container (12), an intensification column (14) or a head, a cooler (20) and a catalyser (18; 30; 60; 90) which comprises a casing (32; 62; 92), said catalyser (18; 30; 60; 90) being connected between said intensification column (14) or said head and said cooler (20), and comprising a bulk or a package of catalyser parts (44),
**characterized in that** said catalyser parts (44) are contained in at least one cartridge (26; 42; 76; 100), and that said casing (32; 62; 92) is arranged such that said cartridge (26; 42; 76; 100) is detachable and exchangeable.

2. The distillation apparatus of claim 1, **characterized in that** said cartridge (26; 42; 76; 100) and said casing (32; 62; 92) are arranged such that singlings produced in said catalyser (18; 30; 60; 90) can drain off via an opening (24; 50; 68; 98) provided in said casing (32; 62; 92).

3. The distillation apparatus of claim 1 or claim 2, **characterized in that** said catalyser (60; 90) comprises at least two exchangeable single cartridges (76a-d; 100a-c), and that said casing (32; 62) is arranged such that spirit vapours flowing through said catalyser (60; 90) are guided in succession through said single cartridges (76a-d; 100a-c).

4. The distillation apparatus of claim 3, **characterized in that** said casing (62) comprises at least one guide channel (78, 82), said guide channel (78, 82) connecting said single cartridges (76a-d) in series with each other.

5. The distillation apparatus of claim 4, **characterized in that** said guide channel (82) is provided in a lid (80), said lid being arranged to be detachable from said casing (62), for exchanging said single cartridges (76a-d).

6. The distillation apparatus of any of claims 3 to 5, **characterized in that** the spirit vapours exhausting from the last single cartridge (76d) are guided past said single cartridges (76a-d) to an exhaust connection piece (66) of said catalyser (60).

7. The distillation apparatus of claim 1 or claim 2, **characterized in that** said catalyser (90) comprises at least two single cartridges (100a-c) and a valve arrangement (102, 104), said valve arrangement being connected between said single cartridges (100a-c) and an input connection piece (94) and an exhaust connection piece (96) of said catalyser (90), and being arranged to allow switching between a parallel operation and a serial operation of said single cartridges (100a-c).

8. The distillation apparatus of any of claims 3 to 7, **characterized in that** said single cartridges (76a-d; 100a-c) have an elongated shape and are arranged within said casing (62; 92) in parallel to each other.

9. The distillation apparatus of any of claims 1 to 8, **characterized in that** said cartridge (110) is provided with at least two channels (112), said channels being arranged to be fillable with different catalyser parts.

## Revendications

1. Dispositif de distillation (10) pour la fabrication d'eaux de vie, comportant une cuve à moût (12), une colonne de concentration (14) ou un chapeau, un refroidisseur (20) et un catalyseur (18 ; 30 ; 60 ; 90), et un boîtier (32 ; 62 ; 92) qui est raccordé entre la colonne de concentration (14) ou le chapeau et le refroidisseur (20), et qui comporte des éléments de catalyseur (44) en vrac ou emballés,
**caractérisé en ce que** les éléments de catalyseur (44) sont logés dans au moins une cartouche (26 ; 42 ; 76 ; 100) et **en ce que** le boîtier (32 ; 62 ; 92) est conformé de manière que la cartouche (26 ; 42 ; 76 ; 100) puisse être enlevée et échangée.

2. Dispositif de distillation selon la revendication 1, **caractérisé en ce que** la cartouche (26 ; 42 ; 76 ; 100) et le boîtier (32 ; 62 ; 92) sont conformés de manière que la blanquette qui se forme dans le catalyseur (18 ; 30 ; 60 ; 90) puisse s'écouler dans le boîtier (32 ; 62 ; 92) à travers une ouverture (24 ; 50 ; 68 ; 98).

3. Dispositif de distillation selon la revendication 1 ou la revendication 2, **caractérisé en ce que** le catalyseur (60 ; 90) comporte au moins deux cartouches individuelles (76a-d ; 100a-c) échangeables et **en ce que** le boîtier (32 ; 62) est conformé de manière que les vapeurs d'alcool circulant à travers le catalyseur (60 ; 90) soient guidées successivement à travers les cartouches individuelles (76a-d ; 100a-c).

4. Dispositif de distillation selon la revendication 3, **caractérisé en ce que** le boîtier (62) comporte au moins un canal de renvoi (78, 82) qui relie en série entre elles les cartouches individuelles (76a-d).

5. Dispositif de distillation selon la revendication 4, **caractérisé en ce que** le canal de renvoi (82) est réalisé dans un couvercle (80) qui peut être déposé du boîtier (62) pour l'échange des cartouches individuelles (76a-d).

6. Dispositif de distillation selon l'une des revendications 3 à 5, **caractérisé en ce que** les vapeurs d'alcool s'échappant de la dernière cartouche individuelle (76d) sont acheminées devant les cartouches individuelles (76a-d), vers une tubulure de sortie (66) du catalyseur (60).

7. Dispositif de distillation selon la revendication 1 ou la revendication 2, **caractérisé en ce que** le catalyseur (90) comporte au moins deux cartouches individuelles (100a-c) et un dispositif à soupape (102-104) qui est raccordé, entre les cartouches individuelles (100a-c) et une tubulure d'entrée (94) ainsi qu'une tubulure de sortie (96) du catalyseur (90), et permet une commutation entre le fonctionnement en parallèle et le fonctionnement en série des cartouches individuelles (100a-c).

8. Dispositif de distillation selon l'une des revendications 3 à 7, **caractérisé en ce que** les cartouches individuelles (76a-d ; 100a-c) sont réalisées oblongues et sont orientées parallèlement les unes aux autres dans le boîtier (62 ; 92).

9. Dispositif de distillation selon l'une des revendications 1 à 8, **caractérisé en ce que** la cartouche (110) est pourvue d'au moins deux canaux (112) qui peuvent être équipés d'éléments de catalyseur différents.
